Europäisches Patentamt

European Patent Office

Office européen des brevets

(19)

(11) Publication number: **0 222 032 B1**

# EUROPEAN PATENT SPECIFICATION

(12)

(45) Date of publication of patent specification: 29.05.91   (51) Int. Cl.⁵: **A61M 1/18, B01D 63/10**

(21) Application number: 85114319.8

(22) Date of filing: 11.11.85

(54) Blood oxygenator.

(43) Date of publication of application:
20.05.87 Bulletin 87/21

(45) Publication of the grant of the patent:
29.05.91 Bulletin 91/22

(84) Designated Contracting States:
DE FR GB IT

(56) References cited:
EP-A- 0 089 122
WO-A-81/00297
DE-B- 2 426 591
DE-U- 7 809 259
GB-A- 2 011 274

(73) Proprietor: **SENKO MEDICAL INSTRUMENT MFG. CO., LTD.**
**23-13, Hongo 3-chome**
**Bunkyo-ku Tokyo(JP)**

(72) Inventor: **Nakanishi, Hikaru**
**5-404, Asohdaidanchi 861-2, Shimoasoh**
**Asoh-ku**
**Kawasaki-shi Kanagawa-ken(JP)**
Inventor: **Kamiya, Masahiro**
**25-11, Koishikawa 1-chome**
**Bunkyo-ku Tokyo(JP)**
Inventor: **Kuwana, Katsuyuki**
**176, Negishicho 3-chome Naka-ku**
**Yokohama-shi Kanagawa-ken(JP)**
Inventor: **Ishizuka, Hiroaki**
**322-12, Shimohiruta**
**Kasukabe-shi Saitama-ken(JP)**

(74) Representative: **Puschmann, Heinz H. et al**
**Rieder & Partner Patentanwälte Postfach 10 12 31**
**W-8000 München 1(DE)**

## Description

## BACKGROUND OF THE INVENTION

This invention relates to a blood oxygenator, comprising an elongated hollow housing, having an inner peripheral surface defining an elongated chamber, an elongated fiber assembly disposed within said chamber along an axis thereof, comprising at least two layers of hollow fibers of a microporous membrane helically wound around a core whereby each adjacent pair of spirally wound layers has the opposite hand to the other fiber layer of the pair, the longitudinal axis of said spiral being identical to that of said housing, the opposite ends of said fiber layers being sealingly secured to the upper and lower end portions respectively by fastening elements of a potting material, gas inlet and outlet means comprised of end caps connected to the opposite ends of said housing and communicating respectively with the opposite ends of hollow fibers, so that an oxygenating gas can flow from said gas inlet means to said gas outlet means through the interiors of hollow fibers, and blood inlet and outlet means formed on said housing and communicating with said chamber at points intermediate to the opposite ends of said bundles of hollow fibers, so that blood can flow from said blood inlet to said blood outlet through said chamber.

## Prior Art

A blood oxygenator of this type is known from EP-A-0 089 122

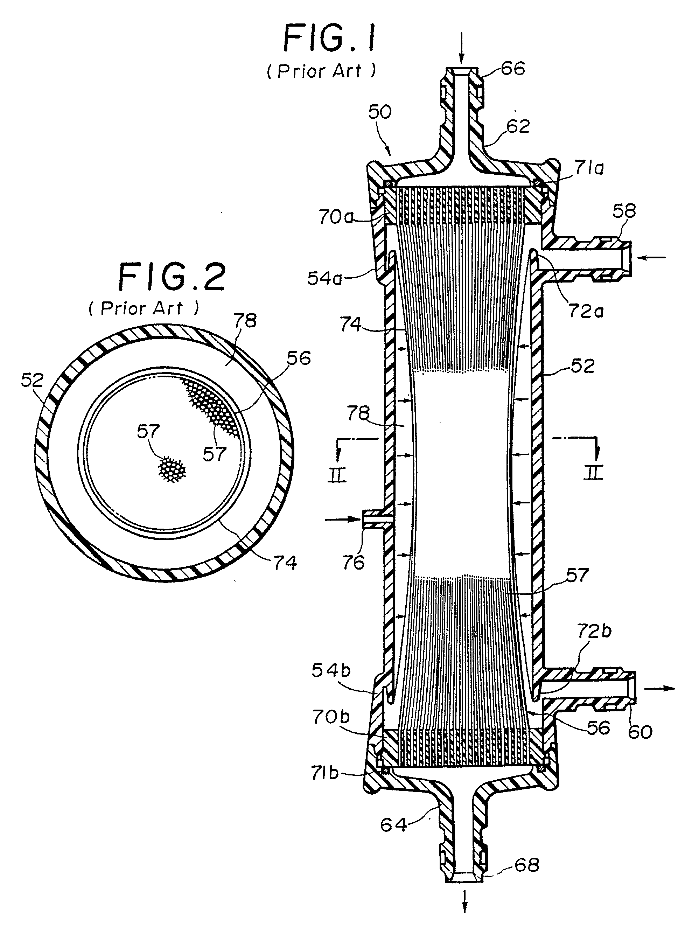

A conventional blood oxygenator or artificial lung is shown in Figs. 1 and 2, generally marked by 50 and comprising a tubular housing 52 of a synthetic resin having upper and lower end portions 54a and 54b of an enlarged diameter, and a bundle 56 of hollow fibres 57 disposed within the tubular housing 52. Each of the hollow fibers 57 is made of a microporous, gas permeable material such as a polycarbonate membrane, a porous polypropylene membrane, a porous polyethylene membrane, a regenerated cellulose membrane, a polysulfone, a porous nylon membrane, a porous polyester membrane, a porous acryl membrane and a porous fluorine plastics membrane. Each hollow fiber 57 has an inner diameter of 30 to 1000 $\mu$m. The upper end portion 54a has a blood inlet 58 for introducing blood into the housing 52 while the lower end end portion 54b has a blood outlet 60 for discharging the blood from the housing 52. A pair of end caps or closure members 62 and 64 are attached to the upper and lower ends of the housing 52, respectively, the end cap 62 having a gas inlet 66 for introducing gas into the housing 52 while the other end cap 64 has a gas outlet 68 for discharging the gas from the housing 52. The opposite ends of the hollow fibers 57 of the bundle 56 are secured to the upper and lower end portions 54a and 54b, respectively, by fastening elements 70a and 70b of a potting resin such as a polyurethane resin and a silicone resin. A pair of seal ring 71a and 71b are carried by the caps 62 and 64, respectively, and are held in sealing engagement with the fastening elements 70a and 70b, respectively. A pair of peripheral retainer flange 72a and 72b are formed on the inner surface of the housing 52, and a tube 74 of a flexible membrane with a thickness of 0.03 to 1.9 mm such as silicone rubber and latex rubber is disposed within the housing, and the opposite ends of the tube 74 are turned outwardly on the outer surfaces of the flanges 72a and 72b. The turned ends of the tube 74 are sealingly secured to the flanges 72a and 72b by a suitable adhesive. A port 76 is formed on the housing 52 and communicates into the interior of the housing 52 between the upper and lower flanges 72a and 72b, the port 76 being connectable to a fluid source such as a compressor for supplying fluid such as air to the interior of the housing 52 via the port 76. With this construction, upon application of the fluid to the interior of the housing 52 via the port 76, the flexible tube 74 is urged radially inwardly to provide a chamber 78 defined by the outer peripheral surface of the tube 74 and the inner peripheral surface of the housing 52.

In operation, an oxygenating gas, such as oxygen, a mixture of oxygen and air and a mixture of oxygen, air and carbon dioxide, is introduced into the end cap 62 via the gas inlet 66 and caused to pass through the internal bores of the hollow fibers 57 of the bundle 56, the gas being discharged from the end cap 64 via the gas outlet 68. And, blood is introduced into the housing 52 via the blood inlet 58 and is caused to pass along the hollow fibers 57 toward the blood outlet 60. At this time, the oxygen in the oxygenating gas flowing through the hollow fibers diffuses through the porous walls thereof and is brought into contact with the blood to oxygenate it while carbon dioxide in the blood passes through the walls of the hollow fibers thereinto. Thus, the oxygenating of the blood is achieved by such gas exchange as is well known in the art.

When the oxygenating gas and the blood are applied to the oxygenator 50, the hollow fibers 57 of the bundle 56 tend to be displaced toward the axis of the bundle 56. As a result, the outer periphery of the bundle 56 is spaced considerably from the the inner peripheral surface of the housing 52, so that most of the blood introduced into the housing 52 passes through a space defined between the outer periphery of the bundle 56 and the inner peripheral surface of the housing 52. Therefore, the blood is not adequately oxygenated. To overcome this difficulty, the fluid under pressure has to be introduced into the housing 52 via the port 76 to flex the tube 74 radially inwardly toward the outer periphery of the bundle 56 to provide the chamber 78, so that the blood passes through the spaces between the hollow fibers 57 to enhance the oxygenating of the blood.

The above described construction allows only small gas exchange areas and is expensive to manufacture.

It is further known to arrange the hollow fibers of the oxygenator element in helically windings on a hollow permeable core, so that said fibers overlying the peripheral surface of said core in a plurality of continuous layers, whereby said fibers in each said layer having substantially equally radially distance from said peripheral surface of said core and are spaced laterally from each adjacent fiber in said layer, said continuous layers having the exterior surface of each individual fiber therein contacting the exterior surface of each adjacent fiber in the layer immediately radially outwardly and radially inwardly thereof at an angle between about 30° and about 90°; see EP-A-0 089 122.

Said oxygenator element is also surrounded by a tubular housing forming a liquid tight annular chamber, whereby said fibers terminating in spaced apart tubesheets joining said fibers, core and shell together, a gas tight chamber adjacent to the outer end surfaces of each of said tubesheets of said element, and whereby port means communicating with each said gas chamber, blood inlet means extending through one of said tubesheets and communicating with the core of said element, and blood outlet means communicating with said liquid tight annular chamber.

According to the helically winding of the fibers around a hollow core and the arrangement of each of the fibers in equally radially distance from said peripherial surface of said core the blood flows perpendicular to the hollow tube and the fibers, therefore the potential surface area for gas exchange is also small, although the construction is expenditure.

It is therefore an object of the invention to provide a blood oxygenator which has a great potential surface area for gas exchange while a compact and less expensive construction is applicable.

Disclosure of Invention

According to the present invention the improvement of the known blood oxygenator consists in that each layer of said fiber assembly is a single bundle of hollow fibers, the inner bundle of which is wound directly around the core which is in the form of a rod, that the outer bundle has a diameter substantially equal or larger than the inner diameter of said chamber to effect a sealing contact with the housing, and that each turn of each helically wound bundle is inclined at an angle of 5 to 75 degrees with respect to a plane perpendicular to said core.

According to a further object of the invention the core rod of the blood oxygenator is tapered from one end toward the other end, so that the layers of the helically-wound fiber bundles are also correspondingly tapered from their one ends toward the other ends.

A further embodiment of the invention consists of a pair of parallel-disposed fiber assemblies, the helically-wound fiber bundles of the two fiber assemblies being held in contact with each other at adjacent outer peripheral surfaces thereof and with the inner peripheral surfaces of said dual-housing. Said housing has a degassing port communicating with said chamber for degassing the blood introduced into said chamber, there being provided a three-way valve connected to said degassing port for selectively opening and closing said degassing port.

Preferably, each of said spirally-wound fiber bundles comprises 2 to 300 hollow fibers.

BRIEF DESCRIPTION OF THE DRAWINGS

Fig. 1 is a cross-sectional view of a blood oxygenator provided in accordance with the prior art;

Fig. 2 is a cross-sectional view of the oxygenator taken along the line II-II of Fig. 1;

Fig. 3 is a cross-sectional view of a blood oxygenator provided in accordance with the present invention;

Fig. 4 is a fragmentary cross-sectional view of the oxygenator of Fig. 3;

Fig. 5 is a view similar to Fig. 3 but showing a modified oxygenator;

Fig. 6 is a view similar to Fig. 3 but showing another modified oxygenator;

Fig. 7 is a cross-sectional view taken along the line VII-VII of Fig. 6;

Fig. 8 is a view similar to Fig. 3 but showing a further modified oxygenator; and

Fig. 9 is a cross-sectional view taken along the line IX-IX of Fig. 8.

DESCRIPTION OF THE PREFERRED EMBODIMENTS OF THE INVENTION

The invention will now be described with reference to the drawings in which like reference numerals denote corresponding parts in several views.

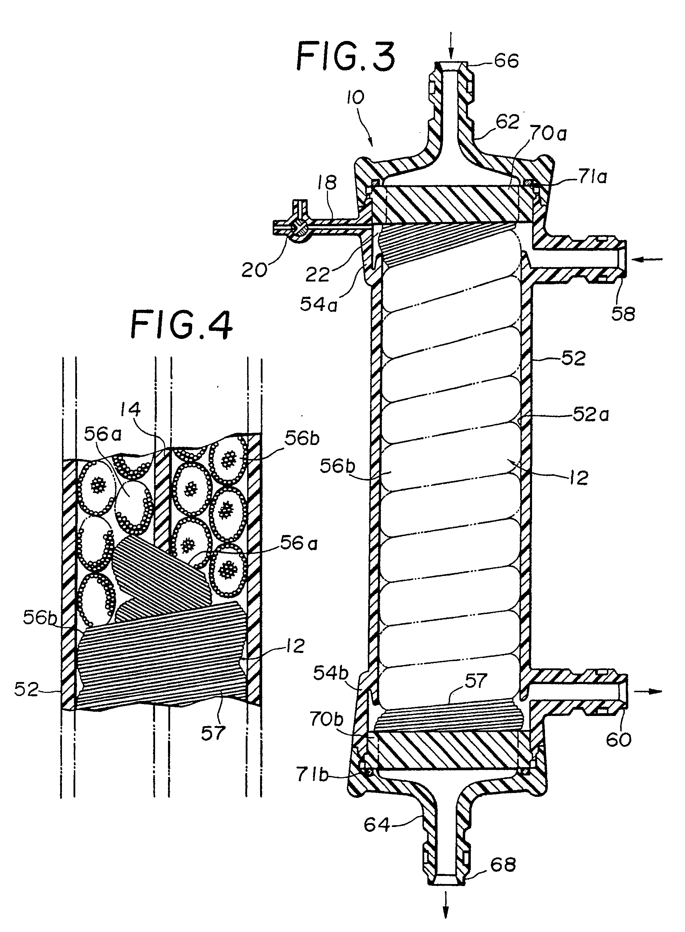

An artificial lung or oxygenator 10 shown in Figs. 3 and 4 comprises a tubular housing 52 of which inner peripheral surface defines a chamber 52a, and an elongated hollow fiber means or assembly 12 disposed within the housing chamber 52a along an axis thereof. The tubular housing 52 has upper and lower end portions 54a and 54b of an enlarged diameter. The upper end portion 54a has a blood inlet 58 for introducing blood into the housing 52 while the lower end portion 54b has a blood outlet 60 for discharging the blood from the housing 52. A pair of end caps or closure members 62 and 64 are attached to the upper end lower ends of the housing 52, respectively, the end cap 62 having a gas inlet 66 for introducing oxygenating gas into the housing 52 while the other end cap 64 has a gas outlet 68 for discharging the gas from the housing 52. Thus, the end caps 62 and 64 serve as gas inlet and outlet means. The opposite ends of the hollow fiber assembly 12 are secured to the upper and lower end portions 54a and 54b, respectively, by fastening elements 70a and 70b of a potting resin such as a polyurethane resin and a silicone resin. A pair of seal ring 71a and 71b are carried by the caps 62 and 64, respectively, and are held in sealing engagement with the fastening elements 70a and 70b, respectively.

The hollow fiber assembly 12 comprises a core rod 14 of a circular cross-section (Fig. 4), and two layers of spirally-wound bundles 56a and 56b of hollow fibers 57 of microporous membrane arranged around the core rod 14, the inner bundle 56a being wound directly around the core rod 14 while the outer bundle 56b is wound around the inner bundle 56. Each turn of the inner spiral bundle 56a is disposed in a plane intersecting the plane in which each turn of the outer spiral bundle 56b is disposed. Each turn of each spiral bundle 56a, 56b is inclined at an angle, for example, of 30 degrees with respect to a plane perpendicular to the core rod 14 but may be inclined at an angle of 5 to 75 degrees. Thus, in the case where the fiber assembly 12 has more than two fiber bundles, the turns of each adjacent bundles are disposed in an intersecting manner. The opposite ends of the hollow fibers 57 of the bundles 56a and 56b are open to the interiors of the caps 62 and 64, respectively. The outer fiber bundle 56a has a corrugated outer peripheral surface since it is spirally wound. The outer diameter of the outer spiral bundle 56a is substantially equal to or larger than the inner diameter of the tubular housing 52 between the blood inlet and outlets 58 and 60, so that the corrugated outer peripheral surface of the outer bundle 56a is held in sealing contact with the inner peripheral surface of the tubular housing 52. Each of the inner and outer fiber bundles 56a and 56b is composed, for example, of 24 hollow fibers to effect a sealing contact thereof with the tubular housing 52 but may be composed of 2 to 300 hollow fibers. Preferably, each bundle is composed of 10 to 100 hollow fibers.

A degassing fitting or port member 18 is formed integrally with the upper end portion 54a of the tubular housing 52 in diametrically opposite relation to the blood inlet 58 and extends outwardly from the outer peripheral surface thereof. The fitting 18 communicates with the housing chamber 52a at a point intermediate the fastening element 70a and the blood inlet 58 for degassing the blood introduced into the housing chamber 52a via the blood inlet 58. A three-way valve 20 is contained in the fitting 18 for selectively opening and closing the fitting 18.

For assembling the oxygenator 10, the spiral fiber bundles 56a and 56b are arranged around the core rod 14 as described above to form a spiral fiber structure. Then, this spiral fiber structure is inserted into the tubular housing 52. Then, the opposite end portions of the fiber bundles 56a and 56b are sealingly secured to the inner peripheral surface of the tubular housing 52 by a potting resin which constitutes the fastening elements 70a and 70b. Then, after the fastening elements 70a and 70b of the potting resin are cured, the outer portions of the fastening elements 70a and 70b are cut away together with the opposite ends of the fiber bundles 56a and 55b. Then, the pair of end caps 62 and 64 are attached to the upper and lower end portions 54a and 54b of the tubular housing 52.

In an alternative embodiment, the core rod 14 is removed from the spiral fiber structure after it is inserted into the tubular housing 52. Thus, the fiber assembly in this embodiment has no core rod. This facilitates the potting operation and the cutting of the cured potting material.

In operation, an oxygenating gas is introduced into the end cap 62 via the gas inlet port 66 and caused to pass through the internal bores of the hollow fibers 57 of the inner and outer spirally-wound bundles 56a and 56b, the gas being discharged from the end cap 64 via the gas outlet 68. And, blood is introduced into the housing chamber 52a via the blood inlet 58 and is caused to pass through spaces between the hollow fibers 57 of the inner and outer bundles 56a and 56b and discharged from the blood outlet 60. At this time, the oxygen in the oxygenating gas flowing through the hollow fibers diffuses through the porous walls thereof and is brought into contact with the blood to oxygenate it while carbon dioxide in the blood passes through the walls of the hollow fibers thereinto. As described above, the outer periphery of the hollow fiber assembly 12 is held in contact with the inner peripheral surface of the tubular housing 52, the blood does not flow freely along the inner peripheral surface of the tubular housing 52. Therefore, the oxygen in the oxygenating gas is sufficiently brought into contact with the blood passing through the housing chamber 52a to oxygenate it efficiently.

As described above, since the inner and outer fiber bundles 56a and 56b are disposed in an intersecting manner, they cooperate with each other to hold them in place. As a result, the spaces between the inner and outer bundles 56a and 56b are maintained constant, and the blood is filled in these spaces, so that the hollow fiber assembly 12 will not unduly be deformed radially inwardly when a force tending to deform it radially inwardly is encountered upon application of the blood into the housing chamber 52a. Gas or air contained in the blood introduced into the tubular housing 52 collects in an annular space 22 and is discharged through the degassing fitting 18.

As described above, each turn of each spiral bundle 56a, and 56b is inclined at an angle of 5 to 75 degrees with respect to the plane perpendicular to the core rod 14. If the angle exceeds 75 degrees, it is difficult to spirally wind the bundles 56a and 56b. On the other hand, if the angle is less than 5 degrees, the length of each hollow fiber 57 is too long, and the spaces between the inner and outer fiber bundles 56a and 56b becomes smaller, and the blood does not efficiently intrude between the hollow fibers 57 of each bundle.

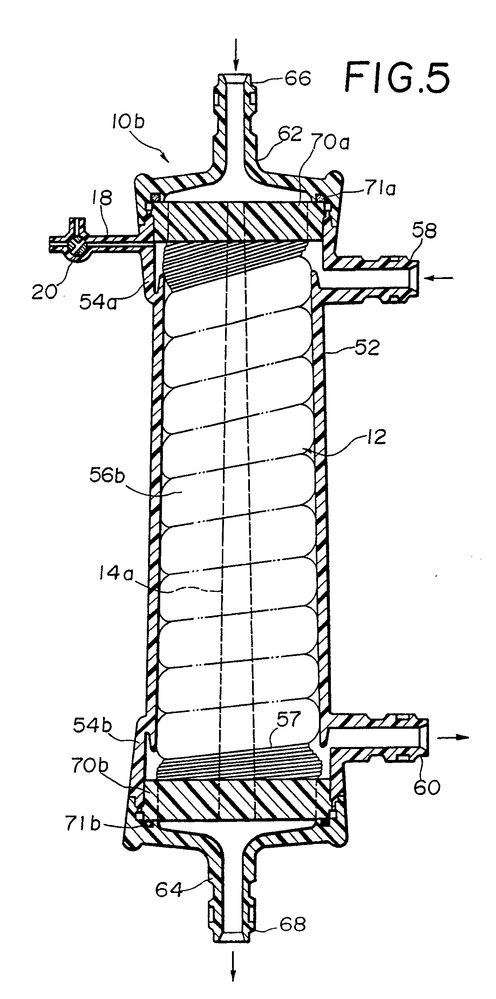

Fig. 5 shows a modified oxygenator 10a which differs from the oxygenator 10 of Fig. 1 in that a tapered core rod 14a replaces the core rod 14, the core rod 14a being decreasing in diameter toward its upper end. Inner and outer spirally-wound fiber bundles 56a and 56b are also tapered toward their upper ends because of the provision of the tapered core rod 14a. Also, a tubular housing 52 is also tapered toward its upper end. With this construction, when assembling the oxygenator 10b, the hollow fiber assembly 12 can be easily inserted into the tubular housing 52 from the lower end thereof without an undue frictional resistance. This eliminates the possibility of damage to the outer periphery of the hollow fiber assembly 12.

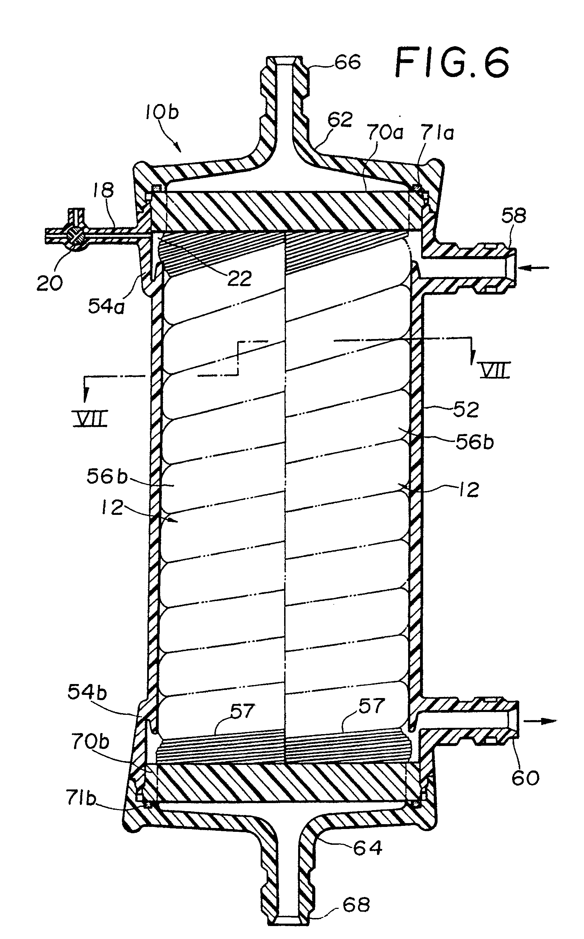

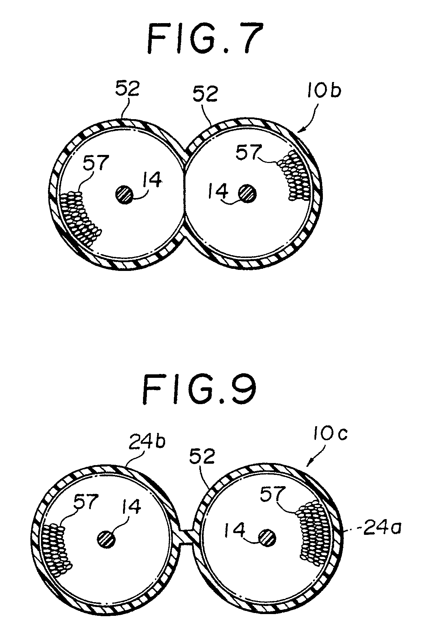

Figs. 6 and 7 show another modified oxygenator 10b which differs from the oxygenator 10 of Fig. 3 in that there are provided a pair of parallel-disposed hollow fiber assemblies 12 and 12 each similar in construction to the hollow fiber assembly 12 of Fig. 3. The pair of hollow fiber assemblies 12 and 12 are held in contact with each other at their outer peripheral surfaces and slightly compressed radially inwardly at their contact portions as best shown in Fig. 7.

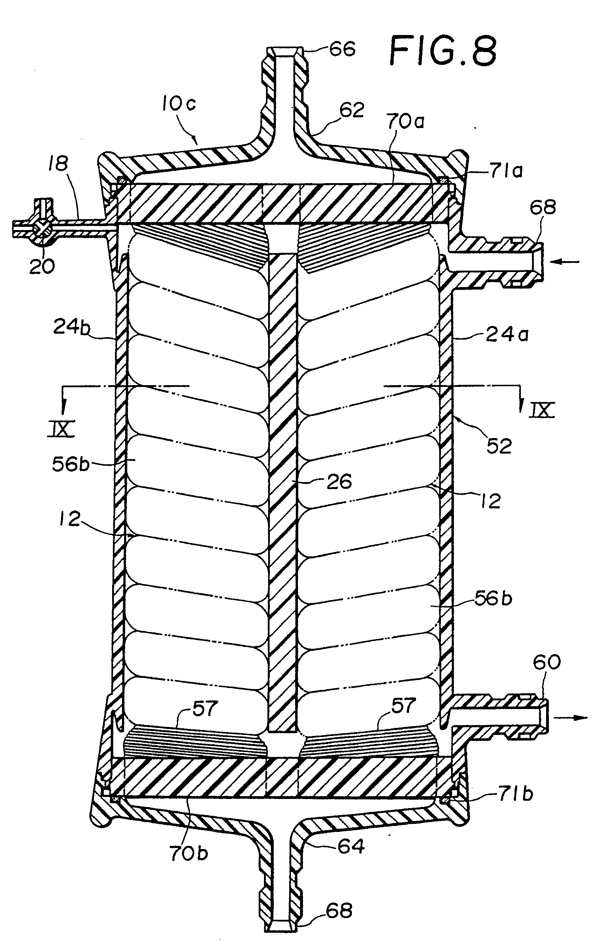

Figs. 8 and 9 show a further modified oxygenator 10c which is of the dual type comprising a pair of hollow fiber assemblies 12 and 12 each similar in construction to the hollow fiber assembly 12 of Fig. 3. A tubular housing 52 has a pair of parallel tubular portions 24a and 24b interconnected by a connecting web 26. The pair of hollow fiber assemblies 12 and 12 are disposed in the tubular portions 24a and 24b, respectively, in the manner as described above for the embodiment of Fig. 3. The connecting web 26 terminates short of the upper and lower fastening elements 70a and 70b at opposite ends thereof, so that the two tubular portion s 24a and 24b communicate with each other at their opposite ends. By virtue of the provision of the pair of tubular portions 24a and 24b, the housing 52 has an increased strength and will not expand when the blood is introduced thereinto.

The oxygenators 10b of Fig. 6 and Fig. 8 can treat a larger amount of blood per unit time.

## Claims

1. A blood oxygenator comprising an elongated hollow housing (52) having an inner peripheral surface defining an elongated chamber (52a), an elongated fiber assembly (12) disposed within said chamber (52a) along an axis thereof comprising at least two layers (56a) and (56b) of hollow fibers (57) of a microporous membrane helically wound around a core (14) whereby each adjacent pair of spirally wound layers has the opposite hand to the other fiber layer of the pair, the longitudinal axis of said spiral being identical to that of said housing (52), the opposite ends of said fiber layers (56a and 56b) being sealingly secured to the upper and lower end portions (54a and 54b) respectively by fastening elements (70a and 70b) of a potting material, gas inlet and outlet means comprised of end caps (62 and 64 respectively) connected to the opposite ends of said housing (52) and communicating respectively with the opposite ends of hollow fibers (56a and 56b) so that an oxygenating gas can flow from said gas inlet means (62) to said gas outlet means (64) through the interiors of hollow fibers (56a and 56b), and blood inlet (58) and outlet (60) means formed on said housing (52) and communicating with said chamber (52a) at points intermediate to the opposite ends of said bundles of hollow fibers (56a and 56b) so that blood can flow from said blood inlet (58) to said blood outlet (60) through said chamber (52a), **characterized** in that each layer of said fiber assembly (12) is a single bundle of hollow fibers (56a, 56b), the inner bundle (56a) of which is wound directly around the core (14) which is in the form of a rod, that the outer bundle (56b) has a diameter substantially equal or larger than the inner diameter of said chamber (52a) to effect a sealing contact with the housing (52), and that each turn of each helically wound bundle is inclined at an angle of 5 to 75 degrees with respect to a plane perpendicular to said core (14).

2. A blood oxygenator according to claim 1, in which a core rod (14a) is tapered from one end toward the other end, so that the layers (56a, 56b) of the helically-wound fiber bundles are also correspondingly tapered from their one ends toward the other ends.

3. A blood oxygenator according to claim 1 with a dual-housing (52), in which there are provided a pair or parallel-disposed fiber assemblies (57), the helically-wound fiber bundles (56a, 56b) of the two fiber assemblies being held in contact with each other at adjacent outer peripheral surfaces thereof and with the inner peripheral surfaces of said dual-housing.

4. A blood oxygenator according to claim 1, in which there is provided a pair of parallel-disposed fiber assemblies (57), said housing (24a, 24b) having a pair of parallel tubular portions interconnected by a connecting web, the pair of fiber assemblies (5) being disposed in the pair of tubular portions, respectively.

5. A blood oxygenator according to claim 1, in which said housing has a degassing port communicating with said chamber for degassing the blood introduced into said chamber, there being provided a three-way valve connected to said degassing port for selectively opening and closing said degassing port.

6. A blood oxygenator according to claim 1 , in which each of the spirally-wound fiber bundles (56a, 56b) comprises 2 to 300 hollow fibers.

**Revendications**

1. Un oxygénateur de sang comprenant une enceinte creuse et allongée (52) ayant une surface périphérique intérieure qui définit une chambre allongée (52a), un assemblage de fibres allongées (12) disposé à l'intérieur de la chambre (52a), dans la direction d'un axe de cette dernière, comprenant au moins deux couches (56a et 56b) de fibres creuses (52) d'une membrane microporeuse, enroulées en hélice autour d'un noyau (14), chaque couche de la paire de couches adjacentes enroulées en hélice ayant un sens d'enroulement opposé à celui de l'autre couche de fibres de la paire, l'axe longitudinal de l'hélice coïncidant avec celui de l'enceinte (52), les extrémités opposées des couches de fibres (56a et 56b) étant respectivement fixées de façon étanche aux parties d'extrémité supérieure et inférieure (54a et 54b) par des éléments de fixation (70a et 70b) consistant en une matière d'enrobage, des orifices d'entrée et de sortie de gaz constitués par des chapeaux d'extrémité (respectivement 62 et 64) qui sont fixés aux extrémités opposées de l'enceinte (52) et qui communiquent respectivement avec les extrémités opposées des fibres creuses (56a et 56b), de façon qu'un gaz d'oxygénation puisse circuler à partir de l'orifice d'entrée de gaz (62) vers l'orifice de sortie de gaz (64), en passant à l'intérieur des fibres creuses (56a et 56b), et un orifice d'entrée de sang (58) et un orifice de sortie de sang (60), formés sur l'enceinte (52) et communiquant avec la chambre (52a) en des points situés entre les extrémités opposées des faisceaux de fibres creuses (56a et 56b), de façon que le sang puisse circuler de l'orifice d'entrée de sang (58) vers l'orifice de sortie de sang (60), en traversant la chambre (52a), **caractérisé** en ce que chaque couche de l'assemblage de fibres (12) consiste en un seul faisceau de fibres creuses (56a, 56b), le faisceau intérieur (56a) étant directement enroulé autour du noyau (14) qui se présente sous la forme d'une tige centrale, en ce que le faisceau extérieur (56b) a un diamètre pratiquement égal ou supérieur au diamètre intérieur de la chambre (52a) pour établir un contact étanche avec l'enceinte (52), et en ce que chaque spire du faisceau enroulé en hélice est inclinée sous un angle de 5 à 75 degrés par rapport à un plan perpendiculaire au noyau (14).

2. Un oxygénateur de sang selon la revendication 1, dans lequel une tige centrale (14a) va en diminuant d'une extrémité vers l'autre extrémité, ce qui fait que les couches (56a, 56b) des faisceaux de fibres enroulés en hélice vont également en diminuant de façon correspondante de leurs premières extrémités vers leurs autres extrémités.

3. Un oxygénateur de sang selon la revendication 1 comportant une double enceinte (52), dans lequel il existe une paire d'assemblages de fibres (57) disposés en parallèle, les faisceaux de fibres enroulés en hélice (56a, 56b) des deux assemblages de fibres étant maintenus en contact mutuel au niveau de leurs surfaces périphériques extérieures adjacentes, et en contact avec les surfaces périphériques intérieures de la double enceinte.

4. Un oxygénateur de sang selon la revendication 1, dans lequel il existe une paire d'assemblages de fibres (57) disposés en parallèle, l'enceinte (24a, 24b) comportant une paire de parties tubulaires parallèles qui sont reliées par une languette de liaison, et les assemblages de la paire d'assemblages de fibres (57) étant respectivement disposés dans la paire de parties tubulaires.

5. Un oxygénateur de sang selon la revendication 1, dans lequel l'enceinte comporte un orifice de dégazage qui communique avec la chambre, pour dégazer le sang qui est introduit dans cette chambre, et dans lequel il existe une vanne à trois voies qui est branchée à l'orifice de dégazage pour ouvrir et fermer sélectivement cet orifice de dégazage.

6. Un oxygénateur de sang selon la revendication 1, dans lequel chacun des faisceaux de fibres enroulés en hélice (56a, 56b) comprend 2 à 300 fibres creuses.

**Ansprüche**

1. Blutoxygenator bestehend aus einem langgestreckten, hohlen Gehäuse, dessen Innenwandung eine längliche Kammer (52a) bildet, mit einem länglichen innerhalb der Kammer (52a) in einer Achsrichtung angeordneten Faserverbund (12), mit mindestens zwei Lagen (56a und 56b) einer aus Hohlfasern (57) bestehenden mikroporösen Membran, die schraubenlinienförmig um einen Kern (14) aufgewickelt ist, so daß jedes Paar der schraubenlinienförmigen Lagenwicklungen entgegengesetzt zur anderen Faserlage verläuft, deren Längsachse identisch mit der des Gehäuses (52) ist, wobei die einander gegenüberliegenden Enden der Faserlagen (56a, 56b) mit den oberen und unteren Endstücken (54a und 54b) über Befestigungsmittel (80a und 70b) einer Vergußmasse fest verbunden sind, mit Gehäuseabschlüsse beinhaltenden Gas-Eintritts- und Austrittsöffnungen (62 bzw. 64), die jeweils mit einander gegenüberliegenden Enden der Hohlfasern (56a und 56b) in Verbindung stehen, so daß das oxygenisierende Gas von der Gaseinlaßöffnung (62) durch die Hohlfasern (56a und 56b) hindurch zu der Gasaustrittsöffnung (64) strömen kann, mit am Gehäuse (52) angeformten Blut-Eintritts-(58) und Austrittsöffnungen (60), die mit der Kammer (52a) an Punkten zwischen den Endbereichen der Fasern derart kommunizieren, daß Blut von der Blut-Einlaßöffnung (58) zur Auslaßöffnung (60) durch die Kammer (52a) strömen kann, dadurch **gekennzeichnet**, daß jede Lage des Faserverbunds (12) ein getrenntes Bündel aus Hohlfasern (56a, 56b) ist, wobei das innenliegende Bündel (56a) unmittelbar auf den stabförmig ausgebildeten Kern (14) aufgewickelt ist, daß das außenliegende Bündel (56b) im Durchmesser im wesentlichen gleich oder größer als der lichte Durchmesser der Kammer (52a) zwecks abdichtender Anlage am Gehäuse (52) ist und daß jede Windung jedes schraubenlinienförmig gewickelten Bündels eine Steigung von 5° bis 75° in bezug auf die zum Kern (14) senkrechte Ebene aufweist.

2. Blutoxygenator nach Anspruch 1, dadurch **gekennzeichnet**, daß sich der stabförmige Kern (14a) nach einem Ende hin verjüngt, derart, daß die Lagen (56a, 56b) der schraubenförmig gewickelten Faserbündel entsprechend von einem zum anderen Ende hin im Durchmesser abnehmen.

3. Blutoxygenator nach Anspruch 1, **gekennzeichnet** durch ein Zweikammergehäuse (52), in dem ein Paar parallel zueinander liegender, aus Hohlfasern (57) bestehende Faserverbundeinheiten vorgesehen sind, wobei die schraubenlinienförmig gewickelten Faserbündel (56a, 56b) beider Verbundeinheiten miteinander an ihren benachbarten Außenflächen und mit den Innenflächen des Zweikammergehäuses in Anlage gehalten sind.

4. Blutoxygenator nach Anspruch 1, dadurch **gekennzeichnet**, daß ein Paar parallel zueinander liegender, aus Hohlfasern (57) bestehender Verbundeinheiten vorgesehen ist, daß das Gehäuse (24a, 24b) ein Paar paralleler über einen Steg miteinander verbundener Rohrabschnitte aufweist, daß das Paar von Faserverbundeinheiten (57) jeweils in jedem der Rohrabschnitte untergebracht ist.

5. Blutoxygenator nach Anspruch 1, dadurch **gekennzeichnet**, daß das Gehäuse eine Gasentlastungsöffnung aufweist, die mit der Kammer zur Entgasung des in die Kammer geleiteten Blutes verbunden ist, daß die Gasentlastungs-

13 EP 0 222 032 B1 14

öffnung mit einem Dreiwegeventil zu seinem wahlweisen Öffnen und Schließen verbunden ist.

6. Blutoxygenator nach Anspruch 1, dadurch **gekennzeichnet**, daß jedes der schraubenlinienförmig gewickelten Faserverbundeinheiten (56a, 56b) 2 bis 300 Hohlfasern umfaßt.

8

# FIG.1
## ( Prior Art )

50

66

62

71a

70a

54a

58

72a

74

52

78

II

II

76

57

54b

72b

70b

57

71b

56

60

64

68

# FIG.2
## ( Prior Art )

78

56

52

57

57

74

## FIG.3

## FIG.4

# FIG.5

# FIG.6

# FIG.7

# FIG.9

# FIG.8